# FASCICULE DE BREVET EUROPEEN

(11) **EP 1 644 104 B1**
(45) Date de publication et mention de la délivrance du brevet: **08.08.2007**
(21) Numéro de dépôt: 04767877.6
(22) Date de dépôt: 08.07.2004
(51) Int. Cl.: B01D 71/72, B01D 69/02, F15C 5/00

(54) **VANNE A COMMANDE ELECTRIQUE COMPRENANT UNE MEMBRANE MICROPOREUSE**
ELEKTRISCH ANGETRIEBENES VENTIL MIT EINER MIKROPORÖSEN MEMBRAN
ELECTRICALLY-DRIVEN VALVE COMPRISING A MICROPOROUS MEMBRANE

(30) Priorité: 10.07.2003 FR 0308443
(43) Date de publication de la demande: 12.04.2006
(73) Titulaire: BIOMERIEUX, 69280 Marcy-L'Etoile (FR)
(72) Inventeur: GARNIER, Francis, F-94500 Champigny sur Marne (FR)
(86) Numéro de dépôt international: PCT/FR2004/050316
(87) Numéro de publication internationale: WO 2005/007278

(56) Documents cités:
- WO-A-00/13795
- WO-A-00/78453
- WO-A-02/44566
- WO-A-98/22719
- WO-A-02/065005
- DE-A- 19 916 802
- US-B1- 6 382 254
- ELYASHEVICH G K ET AL: "COMPOSITE MEMBRANES WITH CONDUCTING POLYMER MICROTUBULES AS NEW ELECTROACTIVE AND TRANSPORT SYSTEMS" POLYMERS FOR ADVANCED TECHNOLOGIES, JOHN WILEY AND SONS, CHICHESTER, GB, vol. 13, no. 10-12, octobre 2002 (2002-10), pages 725-736, XP001143821 ISSN: 1042-7147

## Description

La présente invention concerne, de façon générale, le domaine de la micro-fluidique. Plus précisément, l'objet de la présente invention concerne une vanne à commande électrique formée par des polymères électroactifs.

Le développement de la micro-fluidique, notamment dans le domaine biomédical par le biais des micro dispositifs du type carte d'analyse ou encore dans le domaine de la synthèse chimique avec les microréacteurs, a créé la nécessité de disposer de microvannes performantes, fiables et surtout réutilisables.

Dans le domaine biomédical, différents types de vannes ont été décrits. Un premier type concerne des microvannes utilisant l'effet pyrotechnique. Une telle vanne est décrite par exemple dans le document WO-A-98/22719. Il s'agit d'une vanne miniature pour le remplissage du réservoir d'un appareil d'administration transdermique. Le principe de fonctionnement de cette vanne repose sur la fragmentation d'un substrat provoquée par les gaz de combustion d'une charge pyrotechnique, ledit substrat séparant initialement une réserve de fluide et un réservoir vide. Cette microvanne peut, selon une autre variante de réalisation, être utilisée avec une enveloppe gonflable. Les gaz de combustion provoquent d'abord la rupture du substrat puis le gonflement de l'enveloppe dans le but de pousser un fluide afin de l'évacuer.

Ces microvannes présentent comme principal inconvénient de ne pas être réutilisables. De plus, leur fonctionnement entraîne l'émission de fragments de substrat dans le microcircuit.

Le document WO-A-02/065005 décrit un microdispositif multicouche utilisant un bilame et un matériau élastomère du type PolyDiméthylSiloxane (PDMS) dans lequel et ouvert un canal. Lorsque une tension est appliquée sur le bilame, celui-ci se déforme est vient écraser les parois souples du canal, créant l'occlusion de celui-ci.

Bien que cette vanne soit réutilisable, elle présente un inconvénient majeur qui réside dans la complexité de construction (nombre important de couches), la nécessité d'avoir une élévation de température non négligeable dans le bilame pour obtenir la fermeture du canal. Par ailleurs, le niveau de tenue en étanchéité dans le temps doit également être assez faible.

Il s'avère par ailleurs que le PDMS n'est pas un matériau très adapté au flux de liquide dans des microsystèmes pour des applications biologiques. En effet, son caractère très hydrophobe entraîne une possibilité de formation de bulles dans le circuit microfluidique. Sa mise en oeuvre industrielle est difficile (coulage). Il présente un fort pouvoir d'adsorption des protéines.

Le document US-B-6,382,254 décrit une vanne microfluidique permettant de contrôler le flux d'un liquide à travers un canal. Le fonctionnement de la vanne est basé sur l'utilisation de liquide (type Poly(oxyde d'éthylène)) dont la viscosité augmente fortement avec la température (le liquide passe à l'état de gel).

Ce dispositif comporte l'inconvénient d'avoir à mélanger le liquide transporté avec le liquide activateur (problème de compatibilité, mise en oeuvre difficile), d'avoir à intégrer un liquide dans un espace confiné dans le microdispositif (si le liquide activateur n'est pas mélangé au liquide transporté) et donc des problèmes de remplissage qui en découlent. Ce dispositif présente également l'inconvénient majeur d'avoir à chauffer le liquide et/ou le dispositif jusqu'à 50°C, ce qui est peu compatible avec des réactions biologiques à des températures contrôlées et éventuellement avec des réactifs ne supportant pas de telles élévations de température, notamment les enzymes.

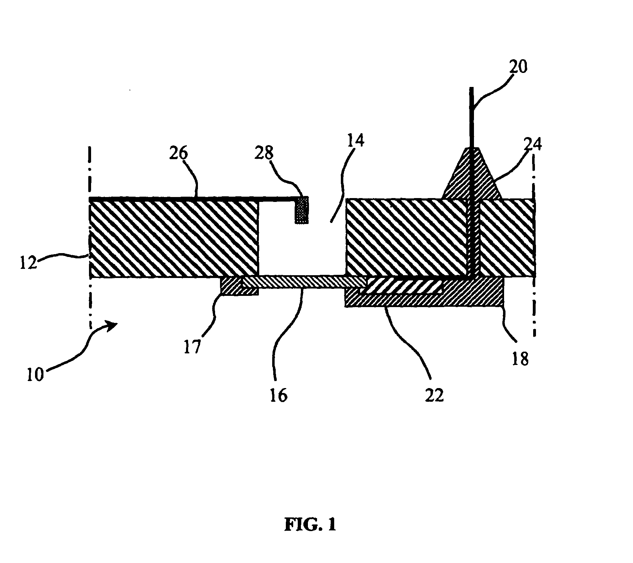

D'autres types de vannes ont également été décrits. Il s'agit de vannes constituées par un film. Ce type de vannes est principalement disposé au niveau des faces de cartes d'analyses. Ces films peuvent être autocollants et présenter des zones non collantes au niveau des vannes. C'est le cas par exemple de la demande de brevet WO-A-00/13795 déposée par la demanderesse qui décrit une invention sur un dispositif ou carte d'analyse permettant de conduire une réaction ou au moins deux réactions en parallèle ou en série en son sein. Le dispositif est constitué par, d'une part, un réseau de canaux au sein duquel le transfert d'au moins un échantillon à traiter et/ou à analyser est possible, et d'autre part, au moins une vanne incorporée au dispositif permettant l'orientation de chaque échantillon transféré au niveau du réseau et donc le contrôle des transferts, des réactions et des analyses dans ledit dispositif. Dans le mode de réalisation des figures 1 à 3, on remarque qu'une pastille en élastomère est insérée entre le film autocollant et le corps de la carte, ce qui autorise une réutilisation de la vanne.

Une telle structure augmente néanmoins le nombre d'éléments et le coût pour permettre de réaliser une carte d'analyse fonctionnelle.

La demanderesse a également déposé une demande de brevet WO-A-00/78453, qui concerne une vanne, traversée par au moins un canal, permettant de diriger au moins un fluide mû par des moyens de transfert au sein d'une carte d'analyse, la carte comportant deux faces reliées l'une à l'autre par un bord, caractérisée par le fait qu'elle est constituée d'une part d'un film, flexible et/ou qui peut être déformé, fixé en partie sur au moins l'une des faces de ladite carte, et d'autre part d'un moyen de compression du film, moyen qui peut être activé ou désactivé. La fixation est réalisée au niveau d'au moins l'une des faces planes par l'intermédiaire d'une fixation située au niveau d'un renfoncement périphérique à h vanne, tel qu'une rainure. De plus, la fixation est assurée par une soudure périphérique à la vanne en fond de rainure.

Toutefois, les films flexibles qui sont utilisés dans cet état de la technique sont inertes, c'est à-dire qu'ils n'ont que des propriétés de déformations structurelles suite à des contraintes physiques. La succession de ces contraintes ainsi que leur intensité, peut induire une déformation constante, pouvant entraîner soit la fermeture, soit l'ouverture définitive. De plus, ces ouvertures et/ou fermetures par déformation obligent à disposer d'un mécanisme pour actionner le mouvement des films flexibles, ce qui est volumineux, lourd et susceptible de représenter un coût non négligeable.

Des polymère non inertes ont également été décrits à titre d'utilisation pour la réalisation d'une vanne. La demande de brevet WO-A-02/44566, au nom de la demanderesse, décrit par exemple des vannes activées par des polymères électro-actifs ou par des matériaux à mémoire de forme. De tels polymères permettent de réaliser des vannes et plus précisément des mini-vannes, qui sont normalement ouvertes ou fermées et qui deviennent respectivement fermées ou ouvertes lorsqu'un courant électrique leur est appliqué. Ces vannes sont constituées d'une part d'un film, flexible et/ou qui peut être déformé, fixé sur la face d'une carte d'analyse, et d'autre part d'un actionneur du film, qui permet d'activer ou de désactiver ladite vanne, cet actionneur étant constitué par une source électrique.

Si les vannes décrites dans cette demande de brevet sont particulièrement efficaces pour réaliser des vannes de surface, c'est-à-dire des vannes qui se trouvent sur au moins une des faces d'une carte d'analyse et donc qui se présentent sous la forme d'un film, elles ne peuvent nullement être utilisées au sein d'un canal ou d'un conduit, dans la mesure où la déformation d'un film ne constitue pas une solution technique adéquate.

De plus, l'utilisation de polymères électro-actifs en grande quantité pour la réalisation de films présentent un coût financier qui peut être rédhibitoire, dans une utilisation pour la réalisation de cartes d'analyse, qui se doivent de présenter un prix de revient le plus bas possible afin de permettre une utilisation à grande échelle.

Un procédé de fabrication d'une membrane microporeuse couverte d'un polymère électro-actif est connu de ELYASHEVICH G K ET AL: "COMPOSITE MEMBRANES WITH CONDUCTING POLYMER MICROTUBULES AS NEW ELECTROACTIVE AND TRANSPORT SYSTEMS" POLYMERS FOR ADVANCED TECHNOLOGIES, JOHN WILEY AND SONS, CHICHESTER, GB, vol. 13, no. 10-12, octobre 2002 (2002-10), pages 725-736, ISSN: 1042-7147.

Au regard de cet état de la technique, l'objectif essentiel de la présente invention est de proposer un vanne, et plus particulièrement une microvanne, susceptible d'être utilisée dans un microdispositif du type carte d'analyse, aussi bien à la surface de la carte qu'au sein d'un canal, formé à l'intérieur de celle-ci.

Un autre objectif essentiel de la présente invention, est de proposer une vanne qui peut être mise en oeuvre un grand nombre de fois.

Un autre objectif de la présente invention, est de proposer une vanne performante et fiable.

Un autre objectif de la présente invention est de proposer une vanne qui, tout en étant basée sur l'utilisation de polymères électro-actifs, présente un coût de revient réduit

Ces objectifs parmi d'autres sont atteints par la présente invention qui concerne une vanne fluidique à commande électrique séparant deux espaces volumiques, qui comporte :
➢ au moins une membrane microporeuse, dont la surface est au moins partiellement recouverte d'au moins un polymère électro-actif, essentiellement disposé au sein des pores de ladite membrane microporeuse, de sorte que, lorsque ledit polymère se trouve dans un état d'oxydoréduction déterminé, il obture lesdits pores, et
➢ une source électrique, destinée à permettre le passage de ladite vanne, de l'état fermé à l'état ouvert et inversement, par changement d'état d'oxydoréduction du polymère électro-actif.

Par surface, on entend la surface développée de la membrane.

Par état d'oxydoréduction déterminé, on entend que le polymère, lorsqu'il obture les pores, se trouve soit à l'état oxydé, soit à l'état réduit et ce, en fonction du type de polymère utilisé.

De façon remarquable, la membrane microporeuse selon l'invention comporte des pores sensiblement circulaires et de diamètre sensiblement constant.

Préférentiellement, la source électrique comporte au moins une électrode et au moins une contre-électrode. De plus, l'électrode est constituée par la membrane microporeuse.

Selon un premier mode de réalisation de la vanne selon l'invention, la membrane microporeuse est en matériau non conducteur.

De façon préférentielle, le matériau non conducteur est un polymère pris dans le groupe comprenant : les polycarbonates (PC), les polyamides (PA), le polyéthylène téréphtalate (PET), le polytétrafluoroéthylène (PTFE) ou Téflon® et leurs dérivés.

Un polyamide peut par exemple être le polyamide 6.6 ou nylon.

Une variante de ce premier mode de réalisation consiste dans un matériau non conducteur, qui est un polymère pris dans le groupe comprenant : les esters de cellulose, les nitrates de cellulose et leurs mélanges.

Avantageusement, cette membrane comporte en outre au moins une couche externe métallique.

Plus avantageusement encore, la membrane comporte également au moins une couche polymérique intermédiaire, de laquelle est solidaire la couche externe métallique.

Selon une second mode de réalisation de la vanne selon l'invention, la membrane microporeuse est en matériau conducteur.

De façon préférentielle, le matériau conducteur est un métal pris dans le groupe comprenant : l'or, le platine, le palladium ou tout autre matériau équivalent bien connu de l'homme du métier

Selon une autre caractéristique remarquable de l'invention, le polymère électro-actif est un polymère conjugué pris dans le groupe comprenant la polyaniline, le polypyrrole, le polythiophène, le polyparaphénylvinylène, le poly-(p-pyridylvinylène) et leurs dérivés.

Selon une autre caractéristique remarquable de l'invention" le diamètre des pores est compris entre 0,1 et 5 microns (µm), préférentiellement entre 0,2 et 1 µm.

Selon une autre caractéristique remarquable de l'invention, la membrane microporeuse présente une épaisseur comprise entre 10 µm et 1 mm, préférentiellement entre 10 et 30 µm.

Un autre objet de l'invention concerne un microdispositif qui comporte au moins une vanne selon l'invention.

De façon préférentielle, ce microdispositif est un microdispositif fluidique du type carte d'analyse.

Un autre objet de la présente invention concerne un procédé de réalisation d'une vanne conformément à l'invention. Ce procédé comprend avantageusement les étapes suivantes :
a) placer une membrane microporeuse dans une solution électrolytique comportant au moins un monomère,
b) induire un courant électrochimique dans ladite solution électrolytique,
c) fixer le monomère sur la membrane microporeuse, et notamment dans les pores de ladite membrane,
d) entraîner la polymérisation radiale du monomère dans les pores de ladite membrane et
e) arrêter la polymérisation par arrêt du courant électrochimique, lorsque les polymères atteignent le centre des pores, de sorte que lesdits polymères bouchent les pores sans se chevaucher.

Conformément à une variante applicable lorsque ladite membrane est en matériau non conducteur, le procédé comprend une étape préalable de métallisation de la membrane microporeuse, ladite étape de métallisation comportant les sous-étapes suivantes:
a') placer une membrane microporeuse dans une solution de monomère,
b') fixer le monomère sur la membrane microporeuse,
c') entraîner la polymérisation du monomère sur toute h surface de la membrane, de façon à obtenir une couche de polymère,
d') placer la membrane ainsi obtenue dans une solution comportant au moins un sel métallique, et
e') entraîner l'électrodéposition du métal sur la couche de polymère par réaction d'oxydoréduction, de sorte que la membrane microporeuse soit recouverte d'un film métallique.

Selon une caractéristique remarquable, le monomère utilisé dans l'étape a') est pris dans le groupe comprenant : le pyrrole, le thiophène et leurs dérivés

Selon une autre caractéristique remarquable le sel métallique utilisé dans l'étape d') est pris dans le groupe comprenant : le cyanure d'or, le chlorure d'or ou tout composé équivalent.

La présente invention et les avantages qu'elle présente seront mieux compris à la lumière de la description détaillée qui suit, faite en référence aux dessins dans lesquels :
La figure 1 représente une vue en coupe transversale d'un dispositif pour la réalisation d'une vanne selon l'invention.
La figure 2 représente une vue photographique de dessus de la membrane microporeusc de la vanne selon l'invention, avant polymérisation.
La figure 3 représente une vue photographique de dessus de la membrane microporeuse de la vanne selon l'invention, au cours de la polymérisation à un stade précoce où le monomère recouvre la surface de la membrane.
La figure 4 représente une vue photographique de dessus de la membrane microporeuse de la vanne selon l'invention, au cours de la polymérisation à un stade avancé où le polymère bouche partiellement les pores de la membrane.
La figure 5 représente une vue photographique de dessus de la membrane microporeuse de la vanne selon l'invention, après la polymérisation, lorsque le polymère bouche complètement les pores de la membrane, c'est-à-dire quand la vanne est à l'état fermé.
La figure 6 représente une vue photographique de dessus de la membrane microporeuse de la vanne selon l'invention, lorsque le polymère est à l'état rétracté, c'est-à-dire lorsque la vanne est à l'état ouvert.
La figure 7 représente une vue photographique de dessus de la membrane microporeuse de la vanne selon l'invention, lorsque la vanne est à nouveau à l'état fermé.

Afin de réaliser la vanne selon l'invention, on utilise un dispositif tel que représenté à la figure 1. Ce dispositif 10 se compose d'un support plan 12 en matériau polymère. Un tel matériau peut être par exemple le PolyTétraFluoroEthylène (PTFE) ou tout matériau aux propriétés équivalentes. Ce support présente une épaisseur d'environ 3 millimètres. Il présente un trou traversant 14, réalisé par perçage. Ce trou présente une section transversale préférentiellement circulaire. Toutefois, la section transversale pourrait être de tout autre profil. Le diamètre du trou traversant est de 3 mm. Toutefois, il peut être compris entre 20 µm et 5 mm. Une membrane microporeuse 16 est solidarisée au support sur sa face inférieure, de sorte qu'elle couvre l'extrémité inférieure du trou traversant 14. Cette solidarisation se fait au moyen de dépôts 17 et 18 d'un matériau collant tel qu'une résine silicone RHODIA Rhodorsil® CAF 4. D'autres matériaux équivalents peuvent être utilisés pour solidariser la membrane microporeuse 16 au support 12.

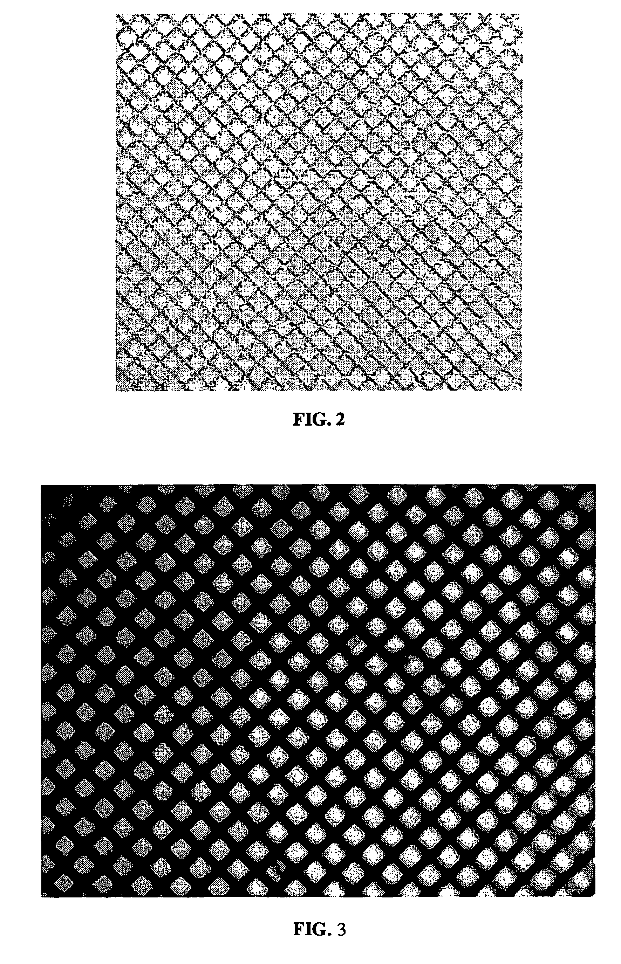

Selon un premier mode de réalisation, la membrane microporeuse 16 est constituée par une grille conductrice métallique. Ainsi, cette grille peut être en or. Cette grille se compose de fils de section transversale sensiblement circulaire de diamètre sensiblement égal à 5 microns (µm). La distance de maillage est avantageusement de 11 µm. Cette grille est représentée en vue photographique de dessus sur la figure 2.

Selon ce premier mode de réalisation qui n'est nullement limitatif de l'invention, la grille 16 présente une connexion électrique, constituée par un fil conducteur 20 relié électriquement à ladite grille au moyen d'un dépôt de laque d'argent 22. Selon ce mode de réalisation, le fil de connexion 20 traverse ledit support 12 par l'intermédiaire d'un second trou traversant 24 aménagé dans le support 12, mais de section transversale plus réduite. Comme on peut le constater sur la figure 1, le dépôt de résine 18 a également pour rôle d'isoler la connexion électrique réalisée par le dépôt 22 de laque d'argent. Grâce à cette connexion électrique, la grille 16 joue le rôle d'électrode.

Un deuxième fil conducteur 26 est disposé sur la face supérieure du support 12 et est connecté à une contre-électrode de platine 28 disposée en aplomb de la grille 16 et préférentiellement centrée par rapport à la grille 16.

Selon une variante avantageuse de l'invention non représentée, le dispositif peut comporter deux contre-électrodes. Selon cette variante, la première contre-électrode est placée de la même façon que dans le mode de réalisation décrit supra. Quant à la deuxième contre-électrode, elle est préférentiellement placée sous la grille 16, sensiblement de façon symétrique par rapport à la première contre-électrode. Une telle variante peut être mise en oeuvre pour améliorer le dépôt de monomère sur la membrane microporeuse et donc obtenir une polymérisation de meilleure qualité.

Afin de réaliser la fonctionnalisation de la membrane microporeuse par polymérisation, le dispositif est ensuite plongé dans une cuve électrochimique (non représentée). L'électrode constituée par la grille 16 et la contre-électrode 28 sont reliées à un générateur de tension. La cuve électrochimique comporte une électrode de référence. Cette électrode de référence peut être par exemple du type Ag/AgCL

La cuve contient une solution électrochimique chargé en monomère, qui peut être le méthyl-3 thiophène, le pyrrole ou un de leurs dérivés, dans un solvant qui peut être l'acétonitrile ou tout solvant équivalent bien connu de l'homme du métier.

Cette solution électrolytique comporte en outre un sel électrolytique, qui peut être du paranaphtalènesulfonate de lithium, du paratoluènesulfonate de lithium, du LiCF₃SO₃ également dilué dans le solvant. De façon tout à fait avantageuse, l'anion du sel électrolytique présente un encombrement stérique important. En effet, lors de la polymérisation, l'anion issu du sel électrolytique se lie avec le polymère de sorte que la taille du polymère et l'encombrement de ce dernier est d'autant plus important que l'encombrement de l'anion est lui- même important.

Un exemple de solution électrolytique peut être par exemple une solution d'acétonitrile comportant 5.10⁻¹ mole/l de méthyl-3 thiophène et 2.10⁻¹ mole/l de LiCF₃SO₃.

La cuve électrochimique est mise sous tension. Le potentiel appliqué peut être constant. Toutefois, il est avantageux d'appliquer une voltamétrie cyclique. Ainsi, le potentiel appliqué peut varier entre les potentiels de -0,3 V/Ag/AgCl et 1,6 V/Ag/AgCl, dans le cas de la solution électrolytique décrite ci-dessus.

L'ensemble du dispositif est placé sous stéréoscope afin de suivre révolution de la polymérisation.

Comme on peut le voir sur la figure 2 et comme décrit précédemment, la grille d'or utilisée dans le dispositif est à l'origine vierge de tout matériau polymère.

Une fois la cuve mise sous tension, les monomères contenus dans la solution électrolytique se déposent sur les fils de la grille, qui constitue l'électrode. Une vue à ce stade de la fonctionnalisation est représentée sur la figure 3.

Une fois la grille couverte de monomère, la croissance du polymère démarre dans les pores de la grille. Cette polymérisation se fait de façon radiale. C'est-à-dire que le polymère croît sous forme de filaments qui convergent depuis la périphérie des pores vers le centre de ces derniers.

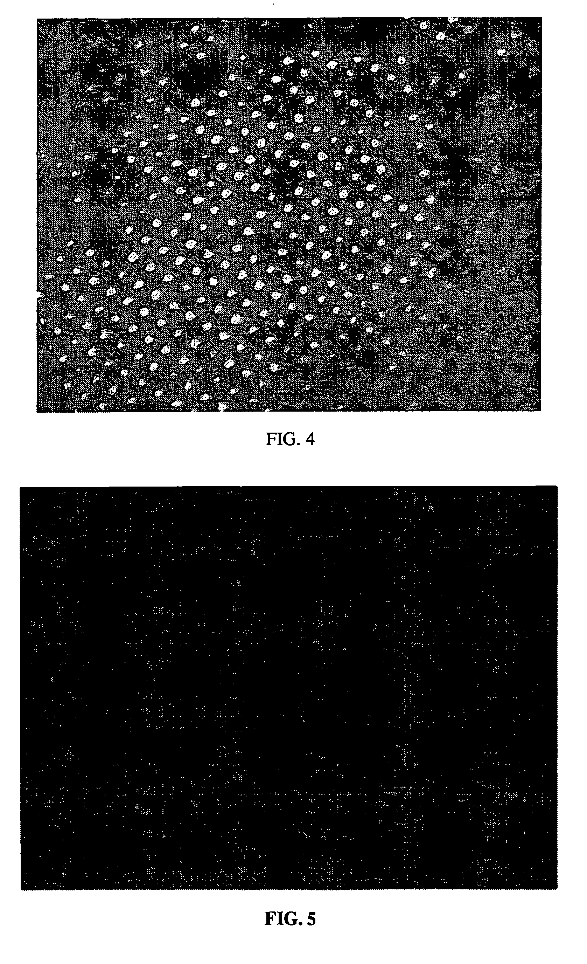

Sur la figure 4, on peut observer la grille à un stade intermédiaire de la polymérisation. Les filaments ont partiellement bouché les pores. Seule la zone centrale des pores est encore libre.

La polymérisation se poursuit jusqu'à ce que les filaments de polymère se rejoignent au centre des pores. A ce stade, la polymérisation est interrompue par arrêt du générateur de tension. L'arrêt de la polymérisation est un moment cruciaL En effet, il doit intervenir lorsque le polymère a entièrement bouché les pores de la grille, d'une façon suffisamment importante pour cette couche de polymère présente une certaine étanchéité. Par contre, elle doit être arrêtée avant que les filaments de polymère ne se chevauchent, voire ne s'entremêlent ; ce qui pourrait remettre en cause le bon fonctionnement de la vanne et notamment son ouverture.

Par ailleurs, il est essentiel que tous les pores de la membrane microporeuse soient de la même dimension et ce, afin de s'assurer que la polymérisation est au même d'avancement, quel que soit le pore.

La figure 5 montre la grille une fois la polymérisation arrêtée. On peut observer que les pores sont entièrement bouchés.

Un moyen permettant de suspendre la polymérisation au moment opportun consiste à déterminer préalablement la charge électrique nécessaire pour effectuer la polymérisation et ce, à une intensité de courant donnée. Une fois cette charge électrique fournie, la générateur de tension est arrêté.

Selon un second mode de réalisation de la vanne selon l'invention, la membrane microporeuse 16 n'est pas une grille conductrice métallique, mais une membrane microporeuse non conductrice, par exemple en matériau polymère. Une telle membrane peut ainsi être en polycarbonate du type NUCLEPORE (marque déposée) fabriquée par WHATMAN^{®} ou ISOPORE (marque déposée) fabriquée par MILLIPORE^{®}. L'utilisation de telles membranes est particulièrement adaptée pour la réalisation de la vanne selon l'invention, dans la mesure où la taille des pores est constante d'un pore à l'autre.

De façon préférentielle, les membranes microporeuses utilisées ont des pores dont la taille varie entre 0,1 à 5 µm.

Pour recouvrir la membrane d'un polymère électroactif, il est nécessaire de rendre cette dernière conductrice. De façon préférentielle, la membrane microporeuse est rendue conductrice par un procédé de métallisation.

Ce procédé consiste, dans une premier temps, à placer la membrane microporeuse dans une solution d'acétonitrile anhydre contenant une concentration de l'ordre de 5.10⁻³ moles/l de pyrrole, préalablement purifié. Cette opération conduit à l'adsorption de monomère pyrrole, en couche très mince, sur toute la surface de la membrane (y compris la surface interne des pores).

Après lavage dans une solution d'acétonitrile, la membrane est immergée dans une solution d'acétonitrile anhydre contenant d'une part une concentration de 5.10⁻² moles/l d'un sel, tel que le naphtalènesulfonate ou le benzènesulfonate de lithium, et d'autre part une concentration de l'ordre de 5.10⁻⁴ moles/l de chlorure ferrique FeCl₃. Cette opération conduit à la polymérisation par voie chimique de la couche de pyrrole, en un film de polypyrrole conducteur.

La prise de contact électrique sur cette membrane est réalisée par:
➢ dépôt sur un coin (environ 1 cm²) de la membrane d'une mince couche d'une solution colloïdale d'argent,
➢ séchage de la couche d'argent, sur laquelle on prend un contact (pince crocodile ou autre, utilisée en électrochimie).

La membrane est en suite immergée dans une solution électrolytique adaptée au dépôt électrochimique d'un film d'or (tel que cyanure d'or 2g/l, cyanure de potassium 16 g/l, hydrogénophosphate disodique 4 g/l.).

Un dépôt cathodique d'un film d'or, dont l'épaisseur est contrôlée par la charge coulombique appliquée, est ensuite réalisé. De façon préférentielle, ce dépôt présente une épaisseur de 40 ou 50 nm.

La membrane ainsi obtenue est ensuite mise en oeuvre dans un dispositif similaire à celui décrit sur la figure 1, et fonctionnalisée selon le même procédé.

La fonctionnement de la membrane microporeuse comme vanne est basée sur le changement d'état d'oxydoréduction du polymère électroactif recouvrant les pores de la membrane. En effet, lorsque la vanne est fermée, c'est-à-dire lorsque le polymère recouvre les pores de la membrane, tel que montré sur la figure 5, ce dernier se trouve à l'état oxydé. Dans cet état, l'anion du sel électrolytique est intercalé dans le polymère, entraînant une augmentation du diamètre des fibres polymériques.

L'ouverture de la vanne se fait par changement d'état d'oxydoréduction du polymère, à savoir de l'état oxydé à l'état réduit.

Pour ce faire, le dispositif est placé dans une cuve électrochimique en présence d'une solution électrolytique comportant un solvant, tel que l'acétonitrile, et un sel d'électrolyte utilisé pour la fonctionnalisation de la membrane microporeuse, mais en absence de monomères. Ce sel d'électrolyte est préférentiellement identique à celui utilisé dans le procédé de fonctionnalisation de la vanne par polymérisation. Toutefois, à titre de variante , il est possible d'utiliser d'autres solutions électrolytiques telles qu'un solution de NaCl dans l'eau. Le sel électrolytique est contenu dans la solution a une concentration comprise entre 10⁻¹ et 5.10⁻¹ moles/l.

Afin d'engendrer le changement d'oxydoréduction du polymère, une tension est appliquée aux bornes de la cuve électrochimique. La valeur de cette tension varie de part et d'autre du potentiel d'oxydoréduction du polymère utilisé. De façon préférentielle, la tension appliquée varie entre -5 et +5 volts, selon que l'on veut oxyder ou réduire le polymère.

En l'espèce, le polymère étant à l'état oxydé ou dopé, une tension négative de l'ordre de -5 volts est appliquée afin d'induire sa réduction.

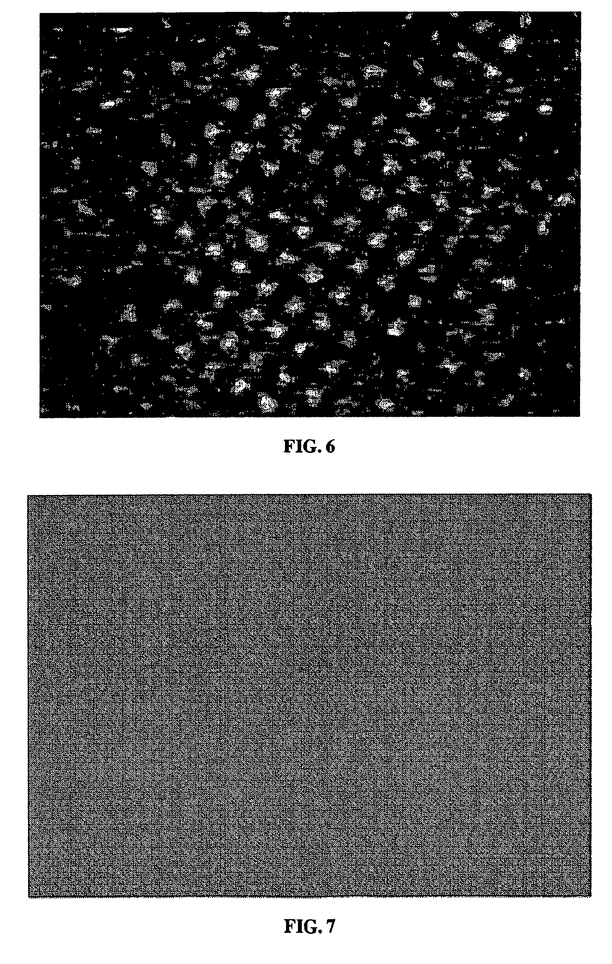

Lorsque le polymère est à l'état réduit ou neutre, l'anion du sel électrolytique intercalé dans le polymère est expulsé dans le solvant, entraînant une diminution du volume des fibres de polymères d'un facteur 4, de sorte que celles-ci ne sont plus suffisamment volumineuses pour boucher les pores de la membrane microporeuse, comme on peut l'observer sur la figure 6. Il s'ensuit que la vanne se retrouve en position ouverte, autorisant le passage de fluide à travers la membrane, par les pores.

De façon similaire, la fermeture de la vanne peut être réalisée en appliquant une tension positive de l'ordre de +5 volts dans la cuve électrochimique, de sorte qu'on induit à nouveau l'oxydation du polymère et par conséquent le dopage de ce dernier par l'anion du sel électrochimique. La vanne se retrouve donc à nouveau à l'état fermé, tel que le montre la figure 7.

Afin d'améliorer les performances d'ouverture et de fermeture de la vanne selon l'invention, les travaux de la demanderesse ont permis de constater qu'il pouvait être avantageux, lors de la fonctionnalisation de la vanne par polymérisation, de faire passer le polymère successivement de l'état oxydé à l'état réduit et ce, afin d'habituer le polymère à passer de l'état dopé à l'état non-dopé. Ce procédé permet d'améliorer de façon sensible la vitesse de dopage et de "dédopage" et par conséquence, la vitesse de fermeture et d'ouverture de la vanne.

Ainsi, la vanne selon l'invention peut préférentiellement présenter des temps d'ouverture et de fermeture compris entre 1 et 100 millisecondes, en fonction du diamètre des pores de la membrane microporeuse, qui varie de façon avantageuse entre 0,2 et 1 µm.

La vanne selon l'invention peut avantageusement être intégrée dans un microdispositif fluidique du type carte d'analyse. Une telle carte d'analyse est une combinaison sur un même support de quelques centimètres carré (cm²) des fonctions de gestion des fluides (micro-fluidique), de réaction chimique et/ou biochimique, de séparation des espèces présentes dans le fluide et de détection de ces espèces. Ces systèmes peuvent permettre d'assurer de façon automatique et autonome toutes les fonctions de toute la chaîne d'analyse chimique et/ou biochimique classique en ne manipulant que de très faibles quantités de réactifs, comprises entre quelques nanolitres et quelques microlitres. La vanne selon l'invention, peut avantageusement être positionnée à la surface de la carte ou au sein d'un microcanal.

La vanne selon l'invention peut être fabriquée ex-situ, selon par exemple un procédé en continu. Ainsi, la membrane microporeuse peut être avantageusement conditionnée en large bandes, stockées en rouleau. Le procédé de fonctionnalisation de la membrane microporeuse par polymérisation peut alors être réalisé en continu, selon une chaîne de fabrication comportant une cuve électrochimique dans laquelle se trouve la solution électrolytique avec le monomère, la bande de membrane plongeant par section, dans la cuve durant un temps nécessaire au dépôt du monomère sur la membrane et à sa polymérisation. Après séchage, le membrane peut alors être reconditionnée sous forme de rouleau prêt à l'usage. Lors de son utilisation, une étape préalable de mouillage dans un solvant est nécessaire.

Si la membrane est constituée par un matériau non conducteur, il peut être avantageusement prévu de compléter le procédé de fonctionnalisation en continu par les étapes préalables nécessaires à la métallisation de la membrane. Ainsi, la chaîne de fabrication peut comprendre, en amont, une première cuve électrochimique comportant une solution électrolytique, avec le monomère, dans laquelle a lieu la fixation du monomère sur la membrane. La membrane est alors plongée dans une deuxième cuve comportant l'agent chimique de polymérisation (FeCl₃). La chaîne comporte une troisième cuve avec une solution métallique, dans laquelle est plongée la membrane par section, pour réaliser sa métallisation. La membrane ainsi métallisée peut alors suivre le processus de fonctionnalisation par polymérisation tel que décrit ci-dessus.

Un procédé de fabrication de la membrane tel que décrit supra peut être par exemple équivalent à celui décrit dans le brevet EP-B-0142 089.

Une membrane ainsi conditionnée peut alors être utilisée extemporanément et intégrée dans un microdispositif fluidique, tel que décrit ci-dessus. Pour ce faire, la bande de membrane obtenue selon le procédé décrit ci-dessus, peut avantageusement être découpée pour être placée, soit en surface du microdispositif, soit au sein d'un canal ; en conséquence de quoi, la taille et la forme des découpes sont complètement variables.

## Revendications

1. Vanne fluidique à commande électrique séparant deux espaces volumiques, **caractérisée en ce qu'**elle comporte :
➢ au moins une membrane microporeuse (16), dont la surface est au moins partiellement recouverte d'au moins un polymère électro-actif, essentiellement disposé au sein des pores de ladite membrane microporeusc, de sorte que, lorsque ledit polymère se trouve dans un état d'oxydoréduction déterminé, il obture lesdits pores, et
➢ une source électrique, destinée à permettre le passage des pores de ladite vanne, de l'état fermé à l'état ouvert et inversement, par changement d'état d'oxydoréduction du polymère électro-actif.

2. Vanne selon la revendication 1, **caractérisée en ce que** la membrane microporeuse comporte des pores sensiblement circulaires et de diamètre sensiblement constant

3. Vanne selon l'une des revendications 1 à 2, **caractérisée en ce que** la source électrique comporte au moins une électrode et au moins une contre-électrode (28).

4. Vanne selon la revendication 3, **caractérisée en ce que** l'électrode est constituée par la membrane microporeuse (16).

5. Vanne selon l'une des revendications 1 à 4, **caractérisée en ce que** la membrane microporeuse est en matériau non conducteur.

6. Vanne selon la revendication 5, **caractérisée en ce que** le matériau non conducteur est un polymère pris dans le groupe comprenant : les polycarbonates (PC), les polyamides (PA), le polyéthylène téréphtalate (PET), le polytétrafluoroéthylène (PTFE) ou Téflon® et leurs dérivés.

7. Vanne selon la revendication 5, **caractérisée en ce que** le matériau non conducteur est un polymère pris dans le groupe comprenant : les esters de cellulose, les nitrates de cellulose et leurs mélanges.

8. Vanne selon l'une des revendications 5 à 7, **caractérisée en ce que** la membrane comporte en outre au moins une couche externe métallique.

9. Vanne selon la revendication précédente, **caractérisée en ce que** la membrane comporte en outre au moins une couche polymérique intermédiaire, de laquelle est solidaire la couche externe métallique.

10. Vanne selon l'une des revendications 1 à 4, **caractérisée en ce que** la membrane microporeuse est en matériau conducteur.

11. Vanne selon la revendication précédente, **caractérisée en ce que** le matériau conducteur est un métal pris dans le groupe comprenant : l'or, le platine, le palladium.

12. Vanne selon l'une des revendications précédentes, **caractérisée en ce que** le polymère électro-actif est un polymère conjugué pris dans le groupe comprenant la polyaniline, le polypyrrole, le polythiophène, le polyparaphénylvinylène, le poly-(p-pyridylvinylène) et leurs dérivés.

13. Vanne selon l'une des revendications 2 à 12, **caractérisée en ce que** le diamètre des pores est compris entre 0,1 et 5 microns (µm), préférentiellement entre 0,2 et 1 µm

14. Vanne selon l'une des revendications précédentes, **caractérisée en ce que** la membrane microporeuse présente une épaisseur comprise entre 10 µm et 1 mm, préférentiellement entre 10 et 30 µm.

15. Microdispositif, **caractérisé en ce qu'**il comporte au moins une vanne selon l'une des revendications 1 à 14.

16. Procédé de réalisation d'une vanne selon l'une des revendications 1 à 14, **caractérisé en ce qu'**il comprend les étapes suivantes :
a) placer une membrane microporeuse dans une solution électrolytique comportant au moins un monomère,
b) induire un courant électrochimique dans ladite solution électrolytique,
c) fixer le monomère sur la membrane microporeuse, et notamment dans les pores de ladite membrane,
d) entraîner la polymérisation radiale du monomère dans les pores de ladite membrane et
e) arrêter la polymérisation par arrêt du courant électrochimique, lorsque les polymères atteignent le centre des pores, de sorte que lesdits polymères bouchent les pores sans se chevaucher.

17. Procédé selon la revendication précédente, **caractérisé en ce qu'**il comprend une étape préalable de métallisation de la membrane microporeuse, lorsque ladite membrane est en matériau non conducteur, ladite étape de métallisation comportant les sous-étapes suivantes:
a') placer une membrane microporeuse dans une solution de monomère,
b') fixer le monomère sur la membrane microporeuse,
c') entraîner la polymérisation du monomère sur toute la surface de la membrane, de façon à obtenir une couche de polymère,
d') placer la membrane ainsi obtenue dans une solution comportant au moins un sel métallique, et
e') entraîner l'électrodéposition du métal sur la couche de polymère par réaction d'oxydoréduction, de sorte que la membrane microporeuse soit recouverte d'un film métallique.

18. Procédé selon la revendication précédente, **caractérisé en ce que** le monomère est pris dans le groupe comprenant : le pyrrole, le thiophène et leurs dérivés.

19. Procédé selon l'une des revendication 17 ou 18, **caractérisé en ce que** le sel métallique est pris dans le groupe comprenant : le cyanure d'or, le chlorure d'or.

## Claims

1. An electrically controlled fluidic valve separating two volume spaces, **characterized in that** it comprises:
➢ at least one microporous membrane (16), the surface of which is at least partly covered with at least one electroactive polymer essentially placed within the pores of said microporous membrane, so that, when said polymer is in a defined oxidation-reduction state, it blocks off said pores; and
➢ an electrical supply intended to allow the pores of said valve to switch from the closed state to the open state, and vice versa, by changing the oxidation-reduction state of the electroactive polymer.

2. The valve as claimed in claim 1, **characterized in that** the microporous membrane has approximately circular pores of approximately constant diameter.

3. The valve as claimed in either of claims 1 and 2, **characterized in that** the electrical supply has at least one electrode and at least one counterelectrode (28).

4. The valve as claimed in claim 3, **characterized in that** the electrode is formed by the microporous membrane (16).

5. The valve as claimed in one of claims 1 to 4, **characterized in that** the microporous membrane is made of a nonconductive material.

6. The valve as claimed in claim 5, **characterized in that** the nonconductive material is a polymer taken from the group comprising: polycarbonates (PC), polyamides (PA), polyethylene terephthalate (PET), polytetrafluoroethylene (PTFE) or Teflon^{®}, and derivatives thereof.

7. The valve as claimed in claim 5, **characterized in that** the nonconductive material is a polymer taken from the group comprising: cellulose esters, cellulose nitrates and blends thereof.

8. The valve as claimed in one claims 5 to 7, **characterized in that** the membrane further includes at least one external metal layer.

9. The valve as claimed in the preceding claim, **characterized in that** the membrane further includes at least one intermediate polymeric layer to which the external metal layer is fastened.

10. The valve as claimed in one of claims 1 to 4, **characterized in that** the microporous membrane is made of a conductive material.

11. The valve as claimed in the preceding claim, **characterized in that** the conductive material is a metal taken from the group comprising: gold, platinum, palladium.

12. The valve as claimed in one of the preceding claims, **characterized in that** the electroactive polymer is a conjugated polymer taken from the group comprising: polyaniline, polypyrrole, polythiophene, polyparaphenylvinylene, poly(p-pyridylvinylene) and derivatives thereof.

13. The valve as claimed in one of claims 2 to 12, **characterized in that** the pore diameter lies in the range from 0.1 to 5 microns (µm), preferably from 0.2 to 1 µm.

14. The valve as claimed in one of the preceding claims, **characterized in that** the microporous membrane has a thickness lying within the range from 10 µm to 1 mm, preferably from 10 to 30 µm.

15. A microdevice, **characterized in that** it includes at least one valve as claimed in one of claims 1 to 14.

16. A process for producing a valve as claimed in one of claims 1 to 14, **characterized in that** it comprises the following steps:
a) a microporous membrane is placed in an electrolytic solution containing at least one monomer;
b) an electrochemical current is induced in said electrolytic solution;
c) the monomer is fixed on to the microporous membrane, and especially in the pores of said membrane;
d) the radial polymerization of the monomer in the pores of said membrane is carried out; and
e) the polymerization is stopped by cutting off the electrochemical current when the polymers reach the center of the pores, so that said polymers block the pores without overlapping one another.

17. The process as claimed in the preceding claim, **characterized in that** it includes a prior step of metalizing the microporous membrane when said membrane is made of a nonconductive material, said metalization step comprising the following substeps:
a') a microporous membrane is placed in a monomer solution;
b') the monomer is fixed onto the microporous membrane;
c') the polymerization of the monomer is carried out over the entire surface of the membrane so as to obtain a polymer layer;
d') the membrane thus obtained is placed in a solution containing at least one metal salt; and
e') the electrodeposition of the metal on the polymer layer is carried out by an oxidation-reduction reaction so that the microporous membrane is covered with a metal film.

18. The process as claimed in the preceding claims, **characterized in that** the monomer is taken from the group comprising: pyrrole, thiophene and derivatives thereof.

19. The process as claimed in either of claims 17 and 18, **characterized in that** the metal salt is taken from the group comprising: gold cyanide, gold chloride.

## Patentansprüche

1. Elektrisch gesteuertes Flüssigkeitsventil, welches zwei räumliche Bereiche voneinander trennt und **dadurch gekennzeichnet ist, dass** es Folgendes aufweist:
- mindestens eine mikroporöse Membran (16), deren Oberfläche zumindest teilweise mit mindestens einem elektroaktiven Polymer bedeckt ist, welches hauptsächlich innerhalb der Poren der mikroporösen Membran angeordnet ist, sodass das Polymer die Poren verschließt, wenn es sich in einem bestimmten Redoxzustand befindet, sowie
- eine elektrische Stromquelle, die dazu dient, die Poren des Ventils durch Änderung des Redoxzustands des elektroaktiven Polymers vom geöffneten in den geschlossenen Zustand zu überführen und umgekehrt.

2. Ventil gemäß Anspruch 1, **dadurch gekennzeichnet, dass** die mikroporöse Membran Poren aufweist, die im Wesentlichen kreisförmig und von deutlich konstantem Durchmesser sind.

3. Ventil gemäß einem der Ansprüche 1 bis 2, **dadurch gekennzeichnet, dass** die elektrische Stromquelle mindestens eine Elektrode und mindestens eine Gegenelektrode (28) aufweist.

4. Ventil gemäß Anspruch 3, **dadurch gekennzeichnet, dass** die Elektrode aus der mikroporösen Membran (16) besteht.

5. Ventil gemäß einem der Ansprüche 1 bis 4, **dadurch gekennzeichnet, dass** die mikroporöse Membran aus einem nichtleitenden Material besteht.

6. Ventil gemäß Anspruch 5, **dadurch gekennzeichnet, dass** das nichtleitende Material ein Polymer ist, das aus der Gruppe gewählt ist, die Folgendes umfasst: Polycarbonate (PC), Polyamide (PA), Polyethylenterephthalat (PET), Polytetrafluorethylen (PTFE) oder Teflon^{®} sowie deren Derivate.

7. Ventil gemäß Anspruch 5, **dadurch gekennzeichnet, dass** das nichtleitende Material ein Polymer ist, das aus der Gruppe gewählt ist, die Folgendes umfasst: Celluloseester, Cellulosenitrate und Mischungen daraus.

8. Ventil gemäß einem der Ansprüche 5 bis 7, **dadurch gekennzeichnet, dass** die Membran darüber hinaus mindestens eine äußere metallische Schicht aufweist.

9. Ventil gemäß dem vorhergehenden Anspruch, **dadurch gekennzeichnet, dass** die Membran darüber hinaus mindestens eine Polymer-Zwischenschicht aufweist, mit welcher die äußere Metallschicht fest verbunden ist.

10. Ventil gemäß einem der Ansprüche 1 bis 4, **dadurch gekennzeichnet, dass** die mikroporöse Membran aus einem leitenden Material besteht.

11. Ventil gemäß dem vorhergehenden Anspruch, **dadurch gekennzeichnet, dass** das leitende Material ein Metall ist, das aus der Gruppe gewählt ist, die Folgendes umfasst: Gold, Platin und Palladium.

12. Ventil gemäß einem der vorhergehenden Ansprüche, **dadurch gekennzeichnet, dass** das elektroaktive Polymer ein konjugiertes Polymer ist, das aus der Gruppe gewählt ist, die Polyanilin, Polypyrrol, Polythiophen, Polyparaphenylvinylen, Poly(p-pyridylvinylen) sowie deren Derivate umfasst.

13. Ventil gemäß einem der Ansprüche 2 bis 12, **dadurch gekennzeichnet, dass** der Durchmesser der Poren zwischen 0,1 und 5 Mikrometer (µm), vorzugsweise zwischen 0,2 und 1 µm, beträgt.

14. Ventil gemäß einem der vorhergehenden Ansprüche, **dadurch gekennzeichnet, dass** die mikroporöse Membran eine Dicke zwischen 10 µm und 1 mm, vorzugsweise zwischen 10 und 30 µm, aufweist.

15. Mikrovorrichtung, **dadurch gekennzeichnet, dass** sie mindestens ein Ventil gemäß einem der Ansprüche 1 bis 14 aufweist.

16. Verfahren zur Herstellung eines Ventils gemäß einem der Ansprüche 1 bis 14, **dadurch gekennzeichnet, dass** es die folgenden Schritte umfasst:
a) Anordnen einer mikroporösen Membran in einer Elektrolytlösung, die mindestens ein Monomer aufweist,
b) Erzeugen eines elektrochemischen Stroms in der Elektrolytlösung,
c) Fixieren des Monomers auf der mikroporösen Membran, und zwar insbesondere in den Poren der Membran,
d) Bewirken der radialen Polymerisation des Monomers in den Poren der Membran sowie
e) Abbrechen der Polymerisation durch Abschalten des elektrochemischen Stroms, sobald die Polymere die Mitte der Poren erreicht haben, sodass die Polymere die Poren verschließen, ohne sich dabei zu überlappen.

17. Verfahren gemäß dem vorhergehenden Anspruch, **dadurch gekennzeichnet, dass** es einen Schritt umfasst, bei welchem die mikroporöse Membran, sofern es sich um eine Membran aus einem nichtleitenden Material handelt, im Vorfeld metallisiert wird, wobei der Metallisierungsschritt die folgenden Unterschritte aufweist:
a') Anordnen einer mikroporösen Membran in einer Monomerlösung,
b') Fixieren des Monomers auf der mikroporösen Membran,
c') Bewirken der Polymerisation des Monomers auf der gesamten Fläche der Membran, sodass eine Polymerschicht erhalten wird,
d') Anordnen der Membran, die auf diese Weise erhalten wurde, in einer Lösung, die mindestens ein Metallsalz aufweist, sowie
e') Bewirken der elektrischen Abscheidung des Metalls auf der Polymerschicht durch Redoxreaktion, sodass die mikroporöse Membran mit einer Metallschicht bedeckt ist.

18. Verfahren gemäß dem vorhergehenden Anspruch, **dadurch gekennzeichnet, dass** das Monomer aus der Gruppe gewählt ist, die Folgendes umfasst: Pyrrol, Thiophen und deren Derivate.

19. Verfahren gemäß einem der Ansprüche 17 oder 18, **dadurch gekennzeichnet, dass** das Metallsalz aus der Gruppe gewählt ist, die Folgendes umfasst: Goldcyanid und Goldchlorid.
